# FASCICULE DE BREVET EUROPEEN

(11) **EP 3 877 691 B1**
(45) Date de publication et mention de la délivrance du brevet: **23.10.2024**
(21) Numéro de dépôt: 19818221.4
(22) Date de dépôt: 06.11.2019
(51) Int. Cl.: F16L 55/48, F16L 55/18, F16L 55/32, F16L 55/38, F16L 55/44

(54) **OUTIL POUR INTERVENTION SUR LA PAROI D'UNE CANALISATION DE FLUIDE AVEC MODULE DE DIMINUTION DE LA PRESSION**
WERKZEUG MIT DRUCKREDUZIERENDEM MODUL ZUR INTERVENTION AN DER WAND EINES FLÜSSIGKEITSROHRS
TOOL WITH PRESSURE-REDUCING MODULE, FOR INTERVENTION ON THE WALL OF A FLUID PIPE

(30) Priorité: 06.11.2018 FR 1860218
(43) Date de publication de la demande: 15.09.2021
(73) Titulaire: GRTgaz, 92270 Bois-Colombes (FR)
(72) Inventeur: ACKER, Benoit, 59910 BONDUES (FR); FERNANDEZ, Charles, 42400 SAINT-CHAMOND (FR); BONNAUDET, Melissandre, 91230 MONGERON (FR); LECCHI, Maxime, 78500 SARTROUVILLE (FR); COURTALON, Eric, 60200 COMPIEGNE (FR)
(74) Mandataire: Cabinet Beau de Loménie
(86) Numéro de dépôt international: PCT/FR2019/052629
(87) Numéro de publication internationale: WO 2020/094978

(56) Documents cités:
- DE-A1- 4 114 601
- DE-B3- 10 312 606
- FR-A1- 3 016 952
- GB-A- 2 479 129
- GB-A- 212 715
- US-A- 4 413 655

## Description

### Domaine technique

L'invention s'inscrit dans le domaine des outils et méthodes pour l'intervention sur les parois des canalisations pour transport de fluide, telles des canalisations d'hydrocarbures sous forme liquide ou gazeuse, ou encore des canalisations de transport d'eau.

Généralement, le fluide (liquide ou gaz) est sous pression pendant l'exploitation du réseau dont fait partie la canalisation. Plus particulièrement, l'intervention a pour objet la réparation de la canalisation, ou encore la soudure d'éléments rapportés sur la canalisation.

Les canalisations concernées peuvent cheminer à l'air libre, ou être des canalisations enterrées voire des canalisations sous-marines. Leurs parois peuvent présenter, au cours de l'exploitation qui doit durer de nombreuses années, des défauts dus à des phénomènes de corrosion ou d'agression mécanique, qui doivent être réparés. Les parois des canalisations peuvent également présenter des défauts de fabrication. Parfois, des piquages peuvent être réalisés à des fins frauduleuses sur les canalisations, et il est également nécessaire d'intervenir sur la canalisation et retirer le piquage et réparer la paroi de la canalisation.

La réparation doit généralement être faite en mettant hors pression un tronçon de la canalisation encadrant le défaut à réparer, tout en maintenant le transit du fluide, car toute interruption aurait des conséquences économiques lourdes pour l'exploitant de la canalisation ou du réseau. De préférence, la réparation est effectuée après évacuation du fluide du tronçon encadrant le défaut (mise hors gaz ou hors liquide, par exemple).

De la même manière, quand on souhaite effectuer une soudure sur la paroi extérieure de la canalisation, il est parfois nécessaire de couper la circulation du fluide dans le tronçon concerné, notamment pour éviter un refroidissement trop important de la matière, néfaste à la qualité de la soudure et à sa tenue dans le temps.

On connaît des systèmes complexes à utiliser et onéreux de mise hors pression et d'évacuation du fluide, comme les obturateurs en charge et leurs accessoires associés (selle de renfort, perçage en charge, ballons). On connaît aussi des systèmes de bretelle provisoire pour le maintien du transit, complexes dans leur structure et également complexes à manier du fait de leurs implications en termes de sécurité pour les opérateurs.

On connaît aussi le document WO2007141554 qui divulgue un appareil permettant notamment de colmater un défaut en introduisant une conduite interne dans la canalisation, la conduite interne étant positionnée au regard du défaut et un composant expansible disposé autour de la conduite étant activé de manière à gonfler pour venir boucher le défaut de l'intérieur. Une variante de l'appareil est aussi utilisée pour mettre en place une valve dans la canalisation.

Cet appareil implique de laisser en place un outil volumineux dans la canalisation, et est donc peu satisfaisant puisque la canalisation reste partiellement obturée après intervention.

On connaît aussi le document WO03/067134 qui divulgue un appareil pour couper la circulation de fluide (obturer) dans une canalisation à haute pression. L'utilisation de cet appareil implique que la circulation de fluide soit dérivée ou interrompue, ce qui n'est pas satisfaisant.

Enfin, le document FR3016952 décrit un outil d'intervention sur la paroi d'une canalisation qui est muni d'un segment de conduite à travers lequel le fluide peut continuer de s'écouler. Cela étant, il existe un besoin pour améliorer davantage cet outil, en particulier en ce qui concerne sa simplicité d'utilisation.

### Objet et résumé de l'invention

L'invention propose dans ce contexte un outil selon la revendication 1.

Les inventeurs de la présente invention ont observé qu'en équipant directement l'outil d'un module de diminution de la pression du fluide présent dans la partie extérieure, il n'est pas nécessaire de mettre en oeuvre des piquages de la paroi de la canalisation pour faire baisser la pression dans la partie extérieure (typiquement après que les modules de création d'étanchéité aient créé ladite étanchéité).

Préférentiellement, ce module de diminution de la pression peut diminuer la pression jusqu'à ce que le fluide dans la partie extérieure soit à une pression égale à celle de l'extérieur de la canalisation.

Dans les solutions de l'art antérieur, il est en effet nécessaire de réaliser des piquages pour mettre en oeuvre une décompression, et cela n'est pas nécessaire si l'outil réalise lui-même la décompression, par exemple en évacuant au moins partiellement le fluide présent dans la partie extérieure.

On obtient donc une utilisation simplifiée de l'outil car il n'est pas nécessaire de réaliser des piquages.

L'invention est particulièrement bien adaptée pour les canalisations dans lesquelles du liquide circule, dans ce cas, le réservoir va se remplir pour permettre d'évacuer un peu du liquide, ce qui baisse la pression dans la partie extérieure. Le réservoir est vide avant que la vanne ne soit ouverte.

Par exemple et de manière non-limitative, le réservoir est dit vide s'il ne contient qu'un gaz à une pression, par exemple une pression égale à la pression atmosphérique, et par exemple au moins deux fois inférieure à celle du fluide dans la canalisation.

Aussi et de manière non-limitative, le réservoir peut n'être en communication fluidique qu'avec la partie extérieure au moyen de la vanne, et il peut ne pas être en communication fluidique avec par exemple l'intérieur du segment de conduite.

Le réservoir est configuré pour être vide (ou au moins rempli d'un fluide à une pression plus basse que celle du fluide dans la canalisation) initialement (avant que la vanne ne soit ouverte) de sorte que l'ouverture de la vanne fait passer du fluide de la partie extérieure vers le réservoir.

Aussi, le réservoir pourra avoir un volume donné, qui pourra être choisi pour vider la partie extérieur pour une pression initiale du réservoir qui peut être choisie comme proposé ci-dessus.

Selon un mode particulier de réalisation non couvert par la portée des revendications, le module de diminution de la pression comporte un passage entre la partie extérieure et le segment de conduite et une vanne configurée pour laisser passer le fluide de la partie extérieure vers le segment de conduite par effet Venturi.

Les inventeurs ont observé que le segment de conduite et les modules de création d'étanchéité forment une portion de la canalisation qui a un diamètre plus petit que celui de la canalisation. Dès lors, par le déplacement du fluide, on observe une baisse de pression par effet Venturi.

Le diamètre du segment de conduite est inférieur à celui de la canalisation, et sa forme et son diamètre peuvent être choisis pour favoriser l'effet Venturi. En particulier, le segment de conduite peut avoir une forme courbée pour former une restriction dans laquelle le fluide est accéléré, ce qui conduit à une baisse de pression.

Préférentiellement, pour faciliter le passage du fluide, le passage est incliné dans la paroi du segment de conduite par rapport à la direction axiale du segment de conduite.

Par exemple, le passage forme un angle aigu entre la direction générale du fluide dans le segment de conduite et la direction générale du fluide dans le passage lorsque la vanne est ouverte pour baisser la pression dans la partie extérieure.

Par exemple, le passage est incliné vers la direction générale du fluide. L'outil présente donc un passage qui est incliné dans une direction, et on le placera dans la canalisation en fonction du sens de l'inclinaison et du sens d'écoulement du fluide.

Lors de l'ouverture de la vanne, le fluide contenu dans la partie extérieure est évacué au moins partiellement vers le segment de conduite car la pression est moindre dans le segment de conduite.

On obtient ainsi un système simple pour mettre en oeuvre une décompression de la partie extérieure.

Selon un mode particulier de réalisation non couvert par la portée des revendications, le module de diminution de la pression comporte une pompe.

On pourra aussi utiliser une pompe qui va aspirer (au moins partiellement) le fluide présent dans la partie extérieure ; éventuellement pour le rejeter dans le segment de conduite.

Selon un mode particulier de réalisation, l'outil comporte des galets motorisés pour déplacer l'outil dans la canalisation et un module de détermination de la localisation de l'outil dans la canalisation.

Grâce à un tel outil selon ce mode particulier de réalisation, on peut créer une zone (un volume) périphérique étanche dans un tronçon de la canalisation, en vis-à-vis et au contact de la zone (la surface) de la paroi sur laquelle on souhaite intervenir. Cette zone est la partie extérieure, entre le segment de conduite, les premier et deuxième modules de création d'étanchéité.

Cette zone étanche est isolée du fluide circulant, ce qui peut être avantageux sur le plan thermique dans la perspective d'une intervention de type soudure sur la paroi. Mais la zone étanche peut aussi faire l'objet, si nécessaire, d'une décompression voire d'un vidage pour effectuer une intervention sur la paroi hors pression voire hors présence du fluide, alors même que le fluide continue de s'écouler à travers le segment de conduite. Ainsi, l'outil permet la réparation d'une canalisation (ou une autre intervention) sans interruption du fonctionnement du réseau, et permet également de réduire les temps d'intervention. La facilité et la fiabilité de l'utilisation rendent cet outil particulièrement intéressant par rapport aux systèmes de l'art antérieur discutés plus haut. On notera notamment l'absence de système de dérivation externe, un tel système étant rendu inutile par la présence du segment de conduite interne à l'outil.

On peut noter que dans le segment de conduite, le fluide peut s'écouler une fois que le dispositif a atteint sa position désirée, typiquement à l'emplacement où l'on souhaite intervenir, par exemple pour une réparation. Le segment de conduite peut être configuré pour être rendu passant quand cela est nécessaire (par exemple pendant l'intervention). Pour atteindre la position désirée de l'outil dans la canalisation, le point d'intervention, on utilise à la fois un module de détermination de la localisation de l'outil dans la canalisation pour connaître notamment l'emplacement de l'outil par rapport au point d'intervention, et les galets motorisés.

Les inventeurs de la présente invention ont observé que les galets motorisés peuvent non seulement assurer le maintien de l'outil dans la canalisation, et permettre d'obtenir un positionnement précis de l'outil dans la canalisation.

Ainsi, il n'est pas nécessaire de placer une butée dans la canalisation à l'emplacement du point d'intervention pour stopper l'outil contre la butée, car les galets motorisés peuvent déplacer l'outil à l'emplacement désiré, en utilisant les informations provenant du module de détermination de la localisation de l'outil dans la canalisation. En fait, les galets motorisés peuvent être actionnés par leur moteur pour entraîner l'outil en roulant sur la paroi, pour le déplacer.

Le module de localisation équipant directement l'outil, on peut avoir un fonctionnement autonome ou quasi autonome de l'outil jusqu'à ce que le point d'intervention soit atteint.

Les modules de création d'étanchéité peuvent comporter chacun au moins un joint d'étanchéité actionnable en expansion et rétractable, par exemple gonflés à l'huile via un accumulateur huile/azote, ou à expansion par compression via un système de flasques mobiles.

Selon un mode préféré de réalisation, les premier et les deuxième modules de création d'étanchéité sont en deux parties, définissant des sas d'étanchéité entre les deux parties desdits premier ou deuxième modules de création d'étanchéité. Par exemple, deux joints d'étanchéité actionnables en expansion et rétractables sont utilisés pour chaque module de création d'étanchéité. Entre chaque paire de joints, on a un sas d'étanchéité.

Les sas définis par les deux parties permettent d'obtenir une amélioration de la sécurité, en particulier pour des applications dans lesquelles les pressions sont importantes. Tel est notamment le cas pour les réseaux de transport de gaz où les pressions peuvent atteindre 85 bars et exceptionnellement 200bars. La sécurité offerte par l'outil est alors renforcée, ainsi que la fiabilité du processus d'intervention.

Selon un mode particulier de réalisation, les galets motorisés peuvent déplacer l'outil dans la canalisation selon deux directions opposées.

Ce mode particulier de réalisation permet d'obtenir un ajustement encore plus fin de la position de l'outil dans la canalisation. En particulier, il permet de déplacer l'outil à contre-courant par rapport au fluide.

Selon un mode particulier de réalisation, l'outil comporte un module de stockage d'énergie électrique et/ou un module de stockage d'énergie hydraulique (par utilisation de liquide et/ou de gaz).

Ce mode particulier de mise en oeuvre permet d'obtenir un fonctionnement autonome de l'outil qui peut actionner les galets motorisés et les autres éléments actifs de l'outil sans raccordement à une source d'énergie externe électrique ou hydraulique (par externe, on entend externe à l'outil, par exemple distante).

L'homme du métier saura dimensionner le module de stockage d'énergie électrique ou hydraulique en fonction de l'application.

On peut noter que si le module de stockage est configuré pour le stockage d'énergie électrique, cela autorise l'utilisation d'un contrôleur, par exemple comprenant un processeur, qui va commander les différents modules de l'outil.

Ce mode particulier de réalisation permet aussi d'utiliser à la fois un module de stockage d'énergie électrique conjointement à un module de stockage d'énergie hydraulique. Par exemple, le module de stockage d'énergie électrique peut alimenter un processeur tandis que le module de stockage d'énergie hydraulique peut alimenter les galets motorisés ou d'autres éléments actionnables.

Selon un mode particulier de réalisation, l'outil comporte un module de génération d'énergie (électrique ou hydraulique) comprenant une hélice, et/ou une turbine, et/ou un galet, le module étant apte à générer de l'énergie hydraulique ou électrique à stocker dans ledit module de stockage d'énergie électrique ou dans le module de stockage d'énergie hydraulique.

Ce mode particulier de réalisation améliore encore plus l'autonomie de l'outil.

Par exemple, si un galet est utilisé, ce galet peut être l'un desdits galets motorisés ou encore un galet qui n'est pas motorisé. Il peut récupérer de l'énergie par roulement contre la paroi de la canalisation.

Selon un mode particulier de réalisation, l'outil comprend un module de propulsion réglable utilisant le déplacement du fluide pour déplacer l'outil dans la canalisation.

Par réglable, on entend que le module de propulsion peut avoir par exemple une première position dans laquelle le déplacement du fluide ne déplace pas l'outil ou pas plus qu'en l'absence du module de propulsion, et une deuxième position dans laquelle le déplacement du fluide propulse l'outil jusqu'à atteindre la vitesse du fluide par un phénomène d'entrainement.

Le module de propulsion réglable peut être utilisé sur de grandes distances sans consommer d'énergie électrique ou hydraulique (sauf lors de son réglage dans un état qui utilise le déplacement du fluide). Cela peut permettre de déplacer l'outil sur de grandes distances, avant d'utiliser les galets motorisés qui permettent d'obtenir un positionnement plus précis.

En fait, le module de propulsion peut par exemple être actionné pour son réglage et sa commande, grâce à un système hydraulique alimenté par un accumulateur huile/azote, grâce à un système électromécanique alimenté par batteries, on encore grâce une combinaison de ces systèmes.

Selon un mode particulier de réalisation, le module de propulsion réglable comporte un volet réglable ou un diaphragme ou une grille réglable. Selon un mode particulier de réalisation, l'outil comprend au moins un module de freinage.

Selon un mode particulier de réalisation, le module de freinage comporte au moins un joint, ou au moins un patin, et un module d'application d'une pression apte à presser le joint ou le patin contre la paroi de la canalisation.

Ainsi, lors d'une phase de freinage, le joint peut être pressé contre la paroi de la canalisation.

Le joint du module de freinage peut être un joint d'un module de création d'étanchéité. De manière alternative, le joint du module de freinage peut être un joint distinct des modules de création d'étanchéité. Préférentiellement, pour un outil qui comporte un module de propulsion et un joint, on va déclencher une phase de freinage par réglage du module de propulsion pour que la propulsion cesse et par pression du joint contre la paroi de la canalisation.

On peut noter que le module de freinage peut ne pas faire partie desdits modules de création d'étanchéité, bien que la présence et l'utilisation du module de freinage améliore l'étanchéité.

Selon un mode particulier de réalisation, le module de freinage comprend deux joints ou deux patins.

Par exemple, les joints ou les patins peuvent être positionnés respectivement aux extrémités opposées de l'outil, par exemple aux extrémités opposées du segment de conduite.

On pourra notamment utiliser un système à huile ou azote pour appliquer une pression sur le ou les joints.

Selon un mode particulier de réalisation, le module de freinage comprend un module de motorisation d'au moins un desdits galets motorisés apte à fonctionner en générateur d'énergie en freinant l'outil lors de son déplacement dans la canalisation.

On peut noter que cette énergie générée, qui peut être de l'énergie électrique ou hydraulique, peut être stockée dans le module de stockage d'énergie électrique ou dans le module de stockage d'énergie hydraulique. Ce mode particulier de réalisation est particulièrement avantageux en ce qui concerne l'autonomie de l'outil.

Il est également possible de ne pas stocker l'énergie générée. Dans ce cas, cette énergie est dissipée.

Selon un mode particulier de réalisation, le module de freinage comprend au moins un frein d'un galet équipant l'outil.

Ce galet peut être l'un desdits galets motorisés ou encore un galet non-motorisé qui peut être utilisé, par exemple, uniquement à des fins de freinage ou de guidage de l'objet.

Ce frein de galet peut être un frein à tambour, à disque, ou encore à patins.

Selon un mode particulier de réalisation, le module de détermination de la localisation comprend un sous-module de réception d'au moins un signal distant.

Le signal distant est un signal dit sans-fil, et sur la base de ce signal ou sur la base d'informations contenues dans ce signal, l'outil peut connaître sa position ou au moins sa position relative (par exemple par rapport au point d'intervention.

Selon un mode particulier de réalisation, le sous-module de réception d'au moins un signal distant comporte un capteur magnétique, par exemple un capteur à effet Hall.

Par exemple, ce capteur magnétique peut mesurer une variation de champ magnétique particulière qu'un contrôleur de l'outil pourra interpréter comme une signature. Par exemple, cette signature peut indiquer la distance jusqu'au point d'intervention.

L'invention n'est néanmoins nullement limitée à la réception de signaux présentant une signature particulière. La détection de tout signal par le capteur magnétique pourra être utilisée pour indiquer à l'outil sa position. Par exemple, si un seul signal est attendu, on placera l'électroaimant qui émet ce signal à une distance prédéfinie du point d'intervention. Un aimant peut être également utilisé.

On notera que l'utilisation du capteur magnétique peut être associée à l'utilisation, à l'extérieur de la canalisation, d'un ou plusieurs électroaimants placés par des opérateurs.

Selon un mode particulier de réalisation, le module de détermination de la localisation comprend en outre un émetteur d'un signal électromagnétique, le capteur magnétique détectant alors un signal réfléchi.

Lorsqu'un défaut est présent sur la paroi de la canalisation, le signal électromagnétique réfléchi peut être affecté par la présence sur la conduite d'une surépaisseur de matériau métallique. La détection s'un signal réfléchi modifié fournit une information sur la localisation de l'outil. Selon un mode particulier de réalisation, le procédé comprend un module de détermination de la vitesse de l'outil à partir de la détection d'au moins deux signaux magnétiques par le capteur magnétique.

Ce module de détermination de la vitesse peut être implémenté au moyen d'un contrôleur (comprenant par exemple un processeur).

En détectant deux signaux, par exemple ayant chacun une signature qui leur est propre (bien que ça ne soit pas obligatoire), et en ayant connaissance d'une distance prédéfinie entre ces deux signaux, on peut connaître, en plus de la position de l'outil, sa vitesse.

Un opérateur sera alors amené à placer des électroaimants espacés de la distance prédéfinie à l'extérieur de la canalisation.

Selon un mode particulier de réalisation, le procédé comprend un module de déclenchement d'un freinage de l'outil sur la base de la détection d'un signal magnétique par le capteur magnétique.

Ce module de déclenchement d'un freinage peut être implémenté au moyen d'un contrôleur (comprenant par exemple un processeur).

Ce freinage peut être réalisé par le module de freinage, ou encore par les galets motorisés (éventuellement avec récupération d'énergie), par le réglage du module de propulsion, ou par plusieurs de ces modules de manière coordonnée.

Selon un mode particulier de réalisation, l'outil comprend un module de déclenchement d'un ajustement fin de la position de l'outil sur la base de la détection d'un signal magnétique par le capteur magnétique.

Ce module de déclenchement d'un ajustement fin de la position de l'outil peut être implémenté au moyen d'un contrôleur (comprenant par exemple un processeur). Par ajustement fin de la position, on entend un ajustement de la position mis en oeuvre par les galets motorisés.

Par exemple, un ajustement fin peut déplacer l'outil sur une distance inférieure à 1 mètre, 50 centimètres, voire 5 centimètres.

Par exemple, un électroaimant avec une signature particulière peut signaler la proximité du point d'intervention, et l'ajustement fin peut être obtenu par une utilisation des galets motorisés.

Si un unique électroaimant est utilisé sur la canalisation, alors il n'est pas nécessaire d'en utiliser un avec une signature particulière.

Selon un mode particulier de réalisation, le sous-module de réception d'au moins un signal distant comprend un module de réception d'une information de géolocalisation.

On notera qu'il est envisageable que le sous-module de réception d'au moins un signal distant comprenne à la fois un module de réception d'une information de géolocalisation et un capteur magnétique, le capteur magnétique permettant une détermination plus fine de la position. L'homme du métier saura quel type de signal peut être utilisé, en fonction de l'application.

Selon un mode particulier de réalisation, le module de détermination de la localisation comprend un odomètre.

De la même manière, un odomètre peut être utilisé pour certaines applications, avec un module de réception d'une information de géolocalisation, ou encore avec un capteur magnétique, ou encore avec les deux.

Selon un mode particulier de réalisation, le module de détermination de la localisation comprend une centrale inertielle.

Selon un mode particulier de réalisation, l'outil comprend un module de contrôle non destructif.

Par exemple, un module de contrôle par rayons X peut équiper l'outil. Selon un mode particulier de réalisation, l'outil comprend un module de diminution de la pression du fluide présent dans la partie extérieure. Selon un mode particulier de réalisation, l'outil comprend au moins un premier capteur de pression agencé pour mesurer la pression dans le segment de conduite et au moins un deuxième capteur de pression agencé pour mesurer la pression dans la partie extérieure.

L'outil peut également être équipé d'un module de communication avec l'extérieur de la canalisation.

Par exemple, des signaux de commande ou de pilotage des différents modules de l'outil peuvent être reçus par le module de communication avec l'extérieur de la canalisation.

Ce module de communication peut être utilisé pour transmettre les informations obtenues par les capteurs de pression pour déterminer quand il est possible d'intervenir sur la paroi de la canalisation.

Selon un mode particulier de réalisation, les premier et deuxièmes modules de création d'étanchéité sont en deux parties, définissant des sas d'étanchéité entre les deux parties desdits premier ou deuxième modules de création d'étanchéité.

Selon un mode particulier de réalisation, l'outil comprend un module de diminution de la pression dans au moins un des sas d'étanchéité, ou un module de diminution de la pression dans chaque sas d'étanchéité.

Les modules de diminution de la pression des sas d'étanchéité sont analogues au module de diminution de la pression dans la partie extérieure. En d'autres termes, ils peuvent utiliser des vannes et des passages (effet Venturi), des pompes, ou encore des réservoirs.

Selon un mode particulier de réalisation, l'outil comprend au moins un capteur de pression supplémentaire agencé pour mesurer la pression dans au moins un desdits sas (voire dans chaque sas).

On peut noter que l'outil peut comporter des moyens de guidage : un galet non-motorisé, un disque de guidage, un patin de guidage.

Selon un mode particulier de réalisation, l'outil comporte plusieurs segments de conduite supplémentaires connectés ensemble, lesdits premier et deuxième modules de création d'étanchéité étant agencés sur un même segment de conduite, et au moins un autre segment de conduite comprend un élément de l'outil choisi parmi :
un module de détermination de la localisation de l'outil, un galet motorisé,
un module de freinage, un module de stockage d'énergie électrique et/ou un module de stockage d'énergie hydraulique, un module de génération d'énergie, un module de propulsion réglable, un contrôleur (comprenant par exemple un processeur), un module de détermination de la vitesse de l'outil, un module de déclenchement d'un freinage, un module de déclenchement d'un ajustement fin de la position de l'outil, un module de contrôle non destructif, un capteur de pression agencé pour mesurer la pression dans la partie extérieure, un module de communication, un galet non-motorisé (par exemple pour le guidage), un disque de guidage, un patin de guidage.

Dans ce mode particulier de réalisation, l'outil comporte deux, trois ou un nombre supérieur à trois de segments de conduite.

Chaque segment peut être équipé d'un module de guidage, par exemple un ou plusieurs galets, ou un ou plusieurs disques de guidage, ou un ou plusieurs patins de guidage.

Pour connecter ensemble les segments de conduite, on pourra utiliser tout type de liaison mécanique articulé entre les segments. Préférentiellement, un système de rotule est utilisé pour connecter les segments de conduite. En outre, la connexion peut être de type connectable/déconnectable de sorte qu'il est possible de choisir, avant une intervention, quels segments de conduite on va utiliser, en fonction des modules fonctionnels qui sont présents sur chaque segment de conduite et également en fonction des paramètres de l'intervention. Ce mode particulier de réalisation permet d'obtenir un outil qui sera adapté à chaque application, avec une bonne modularité.

La connexion entre les segments de conduite peut en outre être une connexion qui permet le transfert d'énergie électrique et/ou hydraulique, voire une connexion qui permet le transfert de signaux électriques (typiquement des signaux de commande).

Préférentiellement, chaque segment de conduite comporte un élément différent choisi dans la liste d'éléments présentée ci-avant.

L'invention propose également une installation comprenant une canalisation et un outil tel que défini ci-avant.

Selon un mode particulier de réalisation, l'installation comprend en outre une pluralité d'électroaimants ou d'aimants agencés en des emplacements prédéfinis.

Ce mode particulier de réalisation est particulièrement bien adapté pour les outils munis de capteurs magnétiques.

L'invention propose en outre un procédé d'utilisation de l'outil tel que défini ci-avant, comprenant une intervention sur la paroi d'une canalisation.

Par exemple, l'intervention peut comprendre entre autres une réparation par pastille soudée, une réparation par rechargement, une soudure d'un élément rapporté sur la canalisation, ou la suppression d'un piquage suivie d'une réparation.

Par exemple, ce piquage peut être un piquage réalisé à des fins frauduleuses.

### Brève description des dessins

La présentation de l'invention va maintenant être poursuivie en relation avec les figures annexées.
- La figure 1 présente une vue de trois-quarts de l'outil selon un mode de réalisation de l'invention,
- La figure 2 présente une coupe longitudinale de l'outil de la figure 1,
- La figure 3 présente la même coupe, le volet de propulsion étant ouvert,
- La figure 4 présente un exemple d'outil, qui n'est pas compris dans le cadre de revendications, d'un module utilisant l'effet Venturi,
- La figure 5 présente un exemple d'outil selon l'invention muni d'un réservoir,
- Les figures 6A et 6B illustrent schématiquement des exemples d'architecture de commande de l'outil,
- Les figures 7A, 7B, 7C, et 7D illustrent le déplacement de l'outil dans une canalisation jusqu'à un point d'intervention,
- La figure 8 représente un outil avec plusieurs segments de conduite, et
- la figure 9 illustre de manière plus détaillée un passage utilisant l'effet Venturi pour diminuer la pression dans le dispositif

### Description détaillée

On va maintenant décrire différentes variantes d'un outil qui permet de mettre en oeuvre une intervention sur une paroi d'une canalisation.

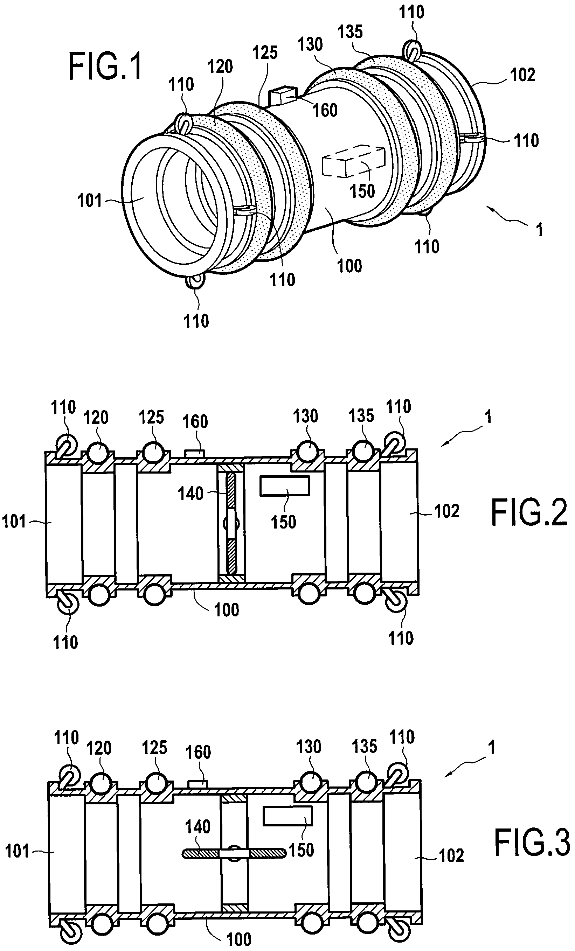

La **figure 1** présente un outil 1 selon un mode de réalisation de l'invention, vu de trois-quarts. Il est composé d'un segment de conduite 100, qui est ici un cylindre rigide à base circulaire dont les embouchures 101 et 102, qui sont ouvertes, sont planes dans des plans perpendiculaires à l'axe du cylindre et constituent donc des cercles.

Toujours à proximité de l'embouchure 101, sur l'extérieur du segment de conduite, est présent un premier joint d'étanchéité gonflable 120. Ce joint d'étanchéité gonflable 120 est destiné, lorsqu'il est gonflé, à être plaqué contre la paroi interne de la canalisation dans laquelle l'outil circule. Le joint peut à l'inverse être replié contre le segment de conduite 100 lorsqu'il est dégonflé. Ce joint d'étanchéité gonflable 120 constitue un corps de révolution, ayant un profil circulaire ou non circulaire, par exemple un corps torique ayant pour axe de révolution l'axe de révolution du segment de conduite, et enserrant celui-ci. Ce joint d'étanchéité gonflable 120 peut être gonflé grâce à un système hydraulique, éventuellement pilotable à distance, comprenant un accumulateur huile/azote. Il est suivi sur le segment de conduite, à une petite distance en se déplaçant vers la deuxième embouchure 102, par un deuxième joint d'étanchéité gonflable 125, similaire au premier et enserrant également le segment de conduite 100. Toujours en se déplaçant vers la deuxième embouchure 102, c'est un troisième joint d'étanchéité gonflable 130 qui est présent, à nouveau similaire aux deux premiers. Un quatrième joint d'étanchéité gonflable 135 est enfin présent, à l'approche de la deuxième embouchure 102. La distance entre les troisième et quatrième joints d'étanchéité gonflables 130 et 135 est similaire voire identique à celle entre les premier et deuxième joints d'étanchéité gonflables 120 et 125 alors que la distance entre les deuxième et troisième joints d'étanchéité gonflables 125 et 130 est plus grande.

Les joints 120 et 125 forment un premier module de création d'étanchéité, et les joints 130 et 135 forment un deuxième module de création d'étanchéité.

D'autres modules de création d'étanchéité peuvent être utilisés, comme des joints d'étanchéité à expansion par compression ou des joints toriques ou à lèvre pouvant s'expanser pour être plaqués contre la paroi interne de la canalisation. Les joints à expansion par compression peuvent comprendre des éléments en élastomère pouvant être expansés par un mécanisme à vis sans fin ou un système hydraulique comprenant des flasques mobiles plans, ou coniques, et permettant de mettre en compression les éléments en élastomère.

Au lieu d'être constitué essentiellement d'un cylindre rigide, le segment de conduite peut être constitué de deux cylindres rigides reliés par un soufflet, pour permettre à l'outil de circuler dans une canalisation présentant des courbes, comme des coudes.

L'extérieur du segment de conduite 100 porte, à proximité de l'embouchure 101, des galets motorisés 110 et qui sont disposés de manière régulière sur la circonférence, par exemple dans un même plan. Ils sont dans l'exemple représenté au nombre de quatre. D'autres galets motorisés 110, sont présents à proximité de l'embouchure 102. L'invention n'est néanmoins nullement limitée aux outils ne comprenant que des galets motorisés. On pourra aussi utiliser des galets de guidage qui ne sont pas motorisés mais qui améliorent la circulation de l'outil, ou encore des galets équipés de freins (qui peuvent être également des galets de guidage) et qui sont ou non motorisés. En outre, on pourra également utiliser des galets pour récupérer lors de leur roulement de l'énergie (électrique ou hydraulique).

Les galets motorisés 110 peuvent être alimentés par exemple par un module de stockage d'énergie électrique ou hydraulique. Ils peuvent déplacer l'outil dans les deux directions opposées. Aussi, les galets peuvent être munis d'une articulation, par exemple pourvue d'un ressort, qui pressent les galets motorisés contre la paroi de la canalisation dans laquelle on place l'outil.

Préférentiellement, un module de motorisation d'au moins un desdits galets 110 est apte à fonctionner en générateur d'énergie. Préférentiellement, la génération d'énergie est une génération d'énergie électrique pour récupérer de l'énergie électrique en freinant l'outil lors de son déplacement dans la canalisation, et transférer cette énergie électrique dans un module de stockage d'énergie électrique (typiquement une batterie).

L'utilisation de galets motorisés permet un déplacement fin de l'outil, par exemple de l'ordre du centimètre. On utilise donc préférentiellement les galets motorisés à proximité d'un point d'intervention de la canalisation.

L'homme du métier saura choisir des galets motorisés adaptés à l'application.

Pour obtenir un fonctionnement encore plus autonome, l'outil 1 est muni d'un module de détermination de la localisation de l'outil dans la canalisation 150.

Ainsi, avec les galets motorisés et le module de détermination de la localisation de l'outil dans la canalisation, l'outil peut se déplacer vers un emplacement choisi : le point d'intervention.

En outre, l'outil est muni d'un module 160 de diminution de la pression du fluide présent dans une partie extérieure. Cette partie extérieure est celle qui sera disposée entre les deux modules de création d'étanchéité, le segment de conduite, et la paroi de la canalisation. Elle présente une forme sensiblement annulaire, et pour pouvoir intervenir sur la paroi de la canalisation, il est nécessaire d'abaisser la pression du fluide dans cette partie.

En utilisant le module 160 directement au sein de l'outil, on rend non nécessaire la mise en oeuvre d'un piquage destiné à faire baisser la pression du fluide situé dans la partie extérieure pour ensuite intervenir sur la paroi.

En **figure 2****,** on retrouve les éléments présentés en relation avec la figure 1, dans une vue de coupe passant par l'axe de révolution de l'outil 1. On visualise que les quatre joints d'étanchéité gonflables sont installés dans des gorges prévues à cet effet à la surface du segment de conduite 100. On visualise aussi que les galets motorisés 110, qu'ils soient à proximité de l'embouchure 101 ou de l'embouchure 102, sont tous configurés dans une même direction, pour faciliter la circulation de l'outil dans une canalisation dans une direction particulière. Comme expliqué ci-avant les galets (tous les galets pouvant équiper l'outil, motorisés ou non) peuvent avoir un débattement radial (par exemple utilisant un ressort) pour garantir un bon guidage malgré les variations géométriques rencontrées sur les canalisations (tolérances de fabrication des tubes, soudures, cintres, déformations locales...). On précise de plus que dans le mode de réalisation présenté, les galets motorisés 110 sont entre l'embouchure correspondante (resp. 101, 102) et le plus proche des joints d'étanchéité gonflables (resp. 120, 135), mais les galets motorisés pourraient être positionnés ailleurs sur l'outil.

L'outil comprend de plus un module de propulsion réglable qui est ici constitué d'un volet réglable 140 placé à mi-distance des deux embouchures 101 et 102 dans l'intérieur du segment de conduite 100. Ce volet 140 est visible en figure 2 dans sa position fermée, qui permet un entrainement maximal de l'outil par le fluide, et en **figure 3** dans sa position ouverte, qui limite au maximum l'entrainement et facilite l'arrêt de l'outil (ou au moins son freinage). Le volet 140 est motorisé, pour passer de l'une à l'autre des deux positions ou pour adopter une position intermédiaire, et pour conserver la position adoptée lors du déplacement de l'outil dans le flux. Il assure donc, en fonction de son taux d'ouverture une « prise au vent » variable. Le volet 140 permet donc à l'outil 1 de se mouvoir dans la canalisation, avec le fluide, dans la même direction que celui-ci, en utilisant le déplacement du fluide pour profiter d'un phénomène d'entrainement. L'outil 1 comprend aussi un système de motorisation pour le volet 140, ou les volets si plusieurs volets sont utilisés.

Le volet 140 peut recevoir de l'énergie électrique ou hydraulique d'un module de stockage d'énergie qui peut également alimenter en énergie les galets motorisés.

De manière alternative, le module de propulsion peut comporter, à la place du ou des volets, un ou des diaphragmes, ou encore une ou des grilles réglables.

On peut noter que l'outil peut comprendre un module de génération d'énergie comportant une hélice, ou une turbine, ou un galet, le module étant apte à récupérer une énergie hydraulique ou électrique, par exemple pour la stocker dans le module de stockage d'énergie électrique ou hydraulique.

On peut noter que si un volet 140 est utilisé (ou une grille ou un diaphragme), alors les galets motorisés peuvent être dans un état de roue-libre quand le volet est fermé et que l'outil est propulsé par entrainement par le fluide.

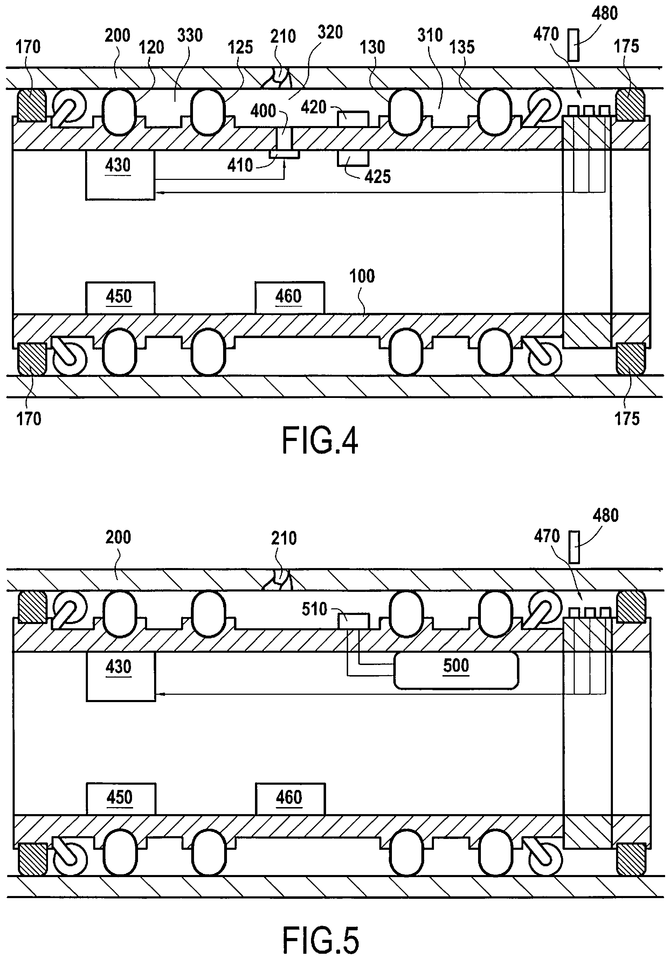

En **figure 4****,** on a représenté l'outil 1 se déplaçant dans une canalisation 200 de transport de fluide. Le fluide peut être un liquide ou un gaz. La canalisation peut être enterrée, à l'air libre, ou cheminer sous la mer ou sous un lac.

L'outil a été préalablement introduit par une gare de lancement (non représentée), qui est un équipement de la canalisation qui permet d'introduire, classiquement, des outils de nettoyage ou d'inspection dans la canalisation. Avant que l'outil soit introduit, on a vérifié que la canalisation 200 était pistonnable, c'est-à-dire qu'un tel objet peut y circuler sans y rester bloqué. L'outil 1 a un diamètre externe qui lui permet de circuler dans la canalisation 200, les galets motorisés 110 étant en contact pour le guidage avec la surface intérieure de la paroi de la canalisation 200. L'outil est mu par le courant de fluide s'écoulant dans la canalisation, à une vitesse qui dépend du niveau d'ouverture du volet 140 (non représenté sur cette figure) et du débit de fluide. Le fluide s'écoule essentiellement à l'intérieur du segment de conduite 100 si le volet est ouvert.

Sur la figure, on a représenté l'outil placé de manière à permettre une intervention sur le point d'intervention 210 de la canalisation 200, qui présente ici un défaut. On a également représenté le gonflage des joints d'étanchéité gonflables 120, 125, 130 et 135 de l'outil 1. Chacun de ces éléments vient entrer en contact avec la paroi de la canalisation pour empêcher le passage de fluide autour du segment de conduite 100. Ainsi, trois zones étanches toriques 310, 320 et 330 sont créées. Le fluide continue de circuler à l'intérieur du segment de conduite 100.

L'outil est également muni d'un module de freinage qui comprend un joint 170 et un joint 175 sur lesquels un module d'application de pression presse les joints contre la paroi de la canalisation (l'invention n'est nullement limitée à la présence de deux joints, un unique joint pouvant être utilisé). Pendant l'intervention, on presse les joints contre la paroi de la canalisation, pour empêcher que l'outil ne bouge.

Les joints 170 et 175 peuvent être plus robustes que les joints 120, 125, 130 et 135, par exemple du caoutchouc avec une surface externe plus dense (pour être plus résistante à l'abrasion)
Pour pouvoir mettre en oeuvre l'intervention, il est tout d'abord nécessaire de baisser la pression dans la partie extérieure 320. Cette partie extérieure 320 est entourée par la paroi de la canalisation 200, les joints 125 et 130, et le segment de conduite 100.

Le module de diminution de la pression du fluide présent dans une partie extérieure comprend, dans cet exemple qui n'est pas couvert par la portée des revendications, un passage 400 et une vanne 410 pour laisser passer le fluide de la partie extérieure vers le segment de conduite par effet venturi. En effet, la pression dans le segment de conduite 100 est plus basse que dans le reste de la canalisation, du fait de la circulation du fluide et de la section réduite au niveau de l'outil. En commandant la vanne 410 dans un état passant, le fluide est transféré depuis la partie extérieure vers le passage formé par le segment de conduite.

Pour surveiller le passage du fluide, on utilise un capteur de pression 420 qui mesure la pression dans la partie extérieure et un capteur de pression 425 qui mesure la pression dans le passage défini par le segment de conduite 100.

Pour commander la vanne 410, et traiter les informations issues des capteurs 420 et 425, l'outil est équipé d'un contrôleur 430. Par exemple, le contrôleur 430 peut comporter un microcontrôleur de type processeur. L'outil comprend également une batterie 450 formant un module de stockage d'énergie électrique, et qui peut alimenter en énergie électrique tous les éléments de l'outil.

Enfin, l'outil comprend un module de contrôle non destructif 460. Par exemple, un module de contrôle par rayons X peut équiper l'outil.

Le module de détermination de l'outil comprend, dans cet exemple, un capteur magnétique 470 (comportant éventuellement un ou plusieurs enroulements). Ce capteur est destiné à être aligné avec un électroaimant 480 que l'on va placer à l'extérieur de la canalisation. L'électroaimant 480 peut émettre un signal avec une signature qui lui est propre, ce qui est utile si plusieurs électroaimants sont agencés à l'extérieur de la canalisation.

Sur la **figure 5****,** on a représenté un outil selon l'invention dans lequel un réservoir 500 est monté sur l'outil, avec une vanne 510 destinée à être ouverte pour vider au moins partiellement la partie extérieure 320. Initialement, le réservoir est vide.

On notera que des modules de diminution de la pression du fluide peuvent également être utilisés pour vider les parties 310 et 330.

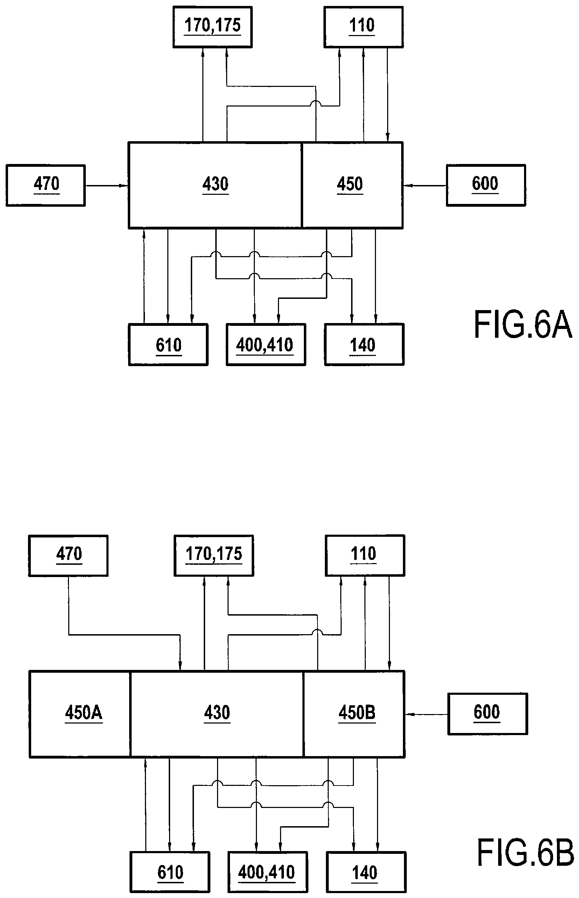

Sur la **figure 6A****,** on a représenté schématiquement un exemple d'architecture de commande de l'outil. Dans cet exemple, l'outil utilise de l'énergie électrique fournie par la batterie 450 décrite en référence à la figure 4. La batterie 450 alimente en énergie électrique les modules de freinage 170, 175, les galets motorisés 110, le volet réglable 140, le module de diminution de la pression à effet Venturi et plus précisément la vanne 410, et un module de communication avec l'extérieur 610.

Le module de communication avec l'extérieur est capable de recevoir des informations, et en particulier des informations de localisation de type géolocalisation. Avec ce module, l'outil est contrôlable depuis l'extérieur de la canalisation.

La batterie 450 reçoit de l'énergie des galets motorisés 110 et d'une hélice ou turbine 600.

Pour commander les différents éléments de l'outil, un contrôleur 430 de l'outil émet des signaux de commande et peut recevoir des informations du module de communication avec l'extérieur 610 ou encore du capteur magnétique 470.

On comprend que le contrôleur 430 peut gérer de manière quasi autonome le fonctionnement de l'outil. Ce contrôleur peut lui-même comporter une mémoire non-volatile dans laquelle sont stockée des instructions pour contrôler l'outil, ces instructions pouvant être exécutées par un processeur du contrôleur.

Sur la **figure 6B****,** on a représenté un mode de réalisation alternatif dans lequel seul le processeur est alimenté par une batterie 650A. Les autres modules sont reçus ou fournissent de l'énergie hydraulique au moyen d'un module de stockage d'énergie hydraulique, par exemple un réservoir sous pression (pouvant comprendre du gaz et du fluide, typiquement huile et gaz) .

L'homme du métier saura adapter les différents modules pour un fonctionnement basé sur l'énergie hydraulique.

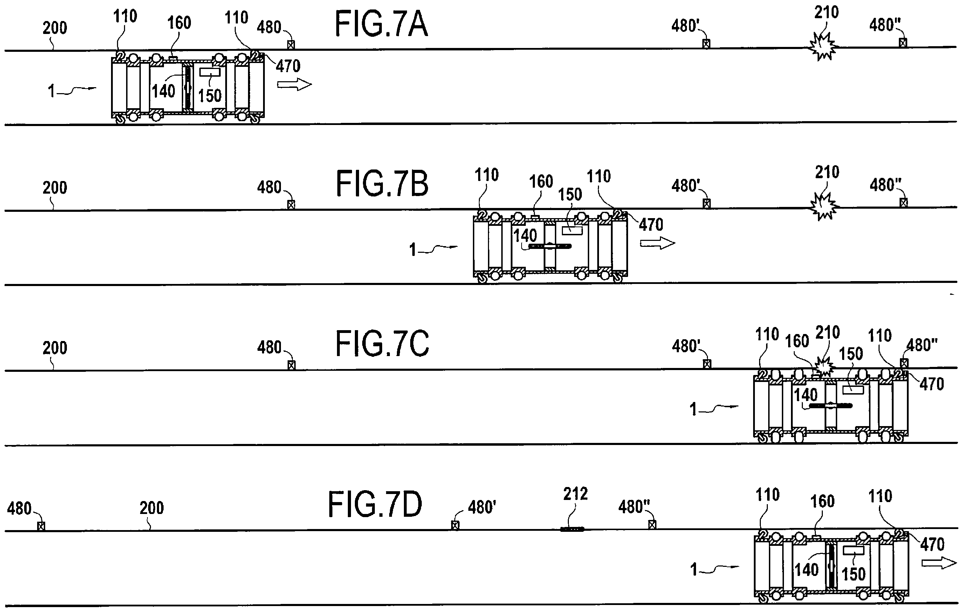

Sur la **figure 7A****,** on a représenté le déplacement de l'outil 1 se déplaçant dans la canalisation 200. A ce stade, le volet 140 est fermé pour que l'outil avance par entrainement grâce au fluide qui circule. L'outil se déplace vers un point d'intervention 210 présentant un défaut à réparer. La vitesse de l'outil peut être connue à partir d'informations reçues ou encore sur la base de détection de signaux magnétiques.

En fait, pour déclencher une phase de freinage, on a agencé un électroaimant 480 à une distance prédéfinie du point 210 (par exemple plusieurs centaines de mètres). La détection du signal émis par cet électroaimant, qui peut avoir une signature qui lui est propre, par le capteur magnétique 470, va déclencher l'ouverture du volet 140, comme illustré sur la **figure 7B****.** L'outil poursuit alors son déplacement jusqu'à détecter la signature d'un signal émis par l'électroaimant 480', qui peut déclencher l'utilisation des galets motorisés 110 pour soit freiner l'outil (ou mettre en oeuvre un freinage par récupération d'énergie), soit pour guider l'outil jusqu'au point d'intervention 410.

Sur la **figure 7C****,** on a représenté l'outil arrivé au point d'intervention, avec un positionnement assuré par la détection du signal ou de la signature du signal émis par l'électroaimant 480". On peut alors mettre en oeuvre une réparation de la paroi.

Sur la **figure 7D****,** on a représenté la réparation 212 effectuée au point d'intervention, et le déplacement de l'outil pour rejoindre soit un autre point à réparer soit pour rejoindre une gare de lancement. Le volet est dans une position fermée.

On notera que l'outil de la figure 7 peut aussi utiliser les joints de freinage 170 et 175 décrits en référence à la figure 5.

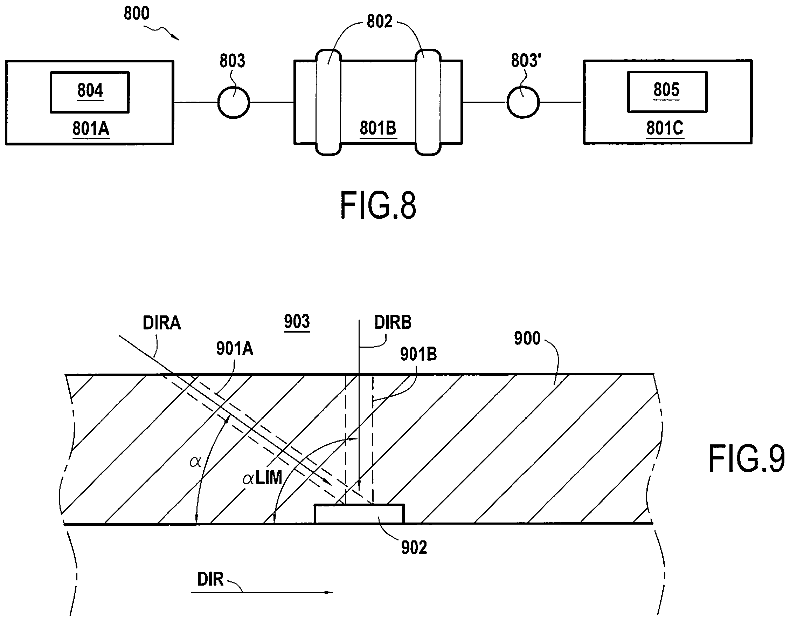

Sur la figure 8, on a représenté un outil 800 qui comporte trois segments de conduite 801A, 801B, et 801C. L'invention n'est néanmoins nullement limitée aux outils comprenant trois segments de conduite. Davantage de segments de conduite peuvent être utilisés.

Le segment de conduite 801B est équipé des premier et deuxième modules de création d'étanchéité 802. Il est préférable que ces modules de création d'étanchéité soient placés sur un même segment de conduite pour obtenir un outil plus simple. En outre, le module de diminution de la pression dans la partie extérieure est sur ce segment de conduite 801B (non représenté).

Les segments de conduite sont connectés ensemble par des connexions à rotule 803 qui permettent à l'outil de passer dans des coudes des canalisations.

Le segment de conduite 801A comporte un élément 804, ici un module de détermination de la localisation de l'outil, et le segment de conduite 801C comporte un élément 805, ici des galets motorisés.

En fait, l'outil peut comprendre d'autres segments de conduite sur lesquels on va placer au moins un élément choisi parmi :
un galet motorisé, un module de freinage, un module de stockage d'énergie électrique et/ou un module de stockage d'énergie hydraulique, un module de génération d'énergie, un module de propulsion réglable, un contrôleur (comprenant par exemple un processeur), un module de détermination de la vitesse de l'outil, un module de déclenchement d'un freinage, un module de déclenchement d'un ajustement fin de la position de l'outil, un module de contrôle non destructif, un capteur de pression agencé pour mesurer la pression dans la partie extérieure, un module de communication, un galet non-motorisé (par exemple pour le guidage), un disque de guidage, un patin de guidage..

Sur la **figure 9****,** on a représenté une paroi d'un segment de conduite équipée d'un passage 901A ou 901B et d'une vanne 902, cet exemple n'étant pas couvert par la portée des revendications. Le passage et la vanne forment un module de diminution de la pression dans la partie extérieure 903 de la canalisation dans laquelle est placée l'outil.

Dans le segment de conduite, le fluide s'écoule dans la direction générale DIR.

Les deux passages 901A et 901B illustrent deux exemples de position possibles pour le passage, pour obtenir une baisse de la pression par effet Venturi.

Le passage 901A forme un angle α aigu entre la direction générale du fluide dans le segment de conduite DIR et la direction générale du fluide dans le passage DIRA lorsque la vanne est ouverte pour baisser la pression dans la partie extérieure 903.

En fait, le passage est incliné vers la direction du fluide DIR.

La position 901B est la position limite avec un angle oLIM qui est égal à 90° entre la direction générale du fluide dans le segment de conduite DIR et la direction générale du fluide dans le passage DIRB lorsque la vanne est ouverte pour baisser la pression dans la partie extérieure 903.

Le mode de réalisation de la figure 9 favorise le passage du fluide de la partie extérieure vers l'intérieur du segment de conduite.

Les différents modes de réalisations présentés ci-avant permettent d'obtenir une intervention sur la paroi d'une canalisation ou une réparation de la paroi de cette canalisation plus rapide, avec un guidage simplifié de l'outil.

## Revendications

1. Outil pour intervention sur la paroi d'une canalisation de fluide, comprenant un segment de conduite (100) à travers lequel le fluide est destiné à s'écouler lorsque l'outil est dans la canalisation, et au moins des premier et deuxième modules (120, 125, 130, 135) de création d'étanchéité entre la paroi de la canalisation et le segment de conduite, pour isoler le fluide circulant dans une partie extérieure (320) d'un tronçon de la canalisation, entre les premier et deuxième modules de création d'étanchéité,
l'outil comprenant en outre un module (160) de diminution de la pression du fluide présent dans la partie extérieure,
**caractérisé en ce que** le module de diminution de la pression comporte un réservoir (500) monté sur l'outil et muni d'une vanne (510), le réservoir étant initialement vide avant que la vanne ne soit ouverte.

2. Outil selon la revendication 1, comprenant au moins un premier capteur de pression (420) agencé pour mesurer la pression dans le segment de conduite et au moins un deuxième capteur de pression (425) agencé pour mesurer la pression dans la partie extérieure.

3. Outil selon l'une quelconque des revendications 1 ou 2, dans lequel les premier et deuxièmes modules de création d'étanchéité sont en deux parties, définissant des sas d'étanchéité entre les deux parties desdits premier ou deuxième modules de création d'étanchéité.

4. Outil selon la revendication 3, comprenant un module de diminution de la pression dans au moins un des sas d'étanchéité, ou un module de diminution de la pression dans chaque sas d'étanchéité.

5. Outil selon l'une quelconque des revendications 3 ou 4, comprenant au moins un capteur de pression supplémentaire agencé pour mesurer la pression dans au moins un desdits sas.

6. Outil selon l'une quelconque des revendications 1 à 5, dans lequel l'outil comprend un passage incliné dans la paroi du segment de conduite par rapport à la direction axiale du segment de conduite.

7. Outil selon l'une quelconque des revendications 1 à 6, comprenant un module (450) de stockage d'énergie électrique et/ou un module de stockage d'énergie hydraulique.

8. Installation comprenant une canalisation (200) et un outil (1) selon l'une quelconque des revendications 1 à 7.

9. Procédé d'utilisation de l'outil selon l'une quelconque des revendications 1 à 7, comprenant une intervention sur la paroi d'une canalisation.

## Patentansprüche

1. Werkzeug zum Eingriff an der Wand einer Rohrleitung eines Fluids, umfassend ein Leitungssegment (100), durch das das Fluid fließen soll, wenn sich das Werkzeug in der Rohrleitung befindet, und mindestens ein erstes und zweites Modul (120, 125, 130, 135) zur Erzeugung von Dichtigkeit zwischen der Wand der Rohrleitung und dem Leitungssegment, um das in einem äußeren Teil (320) eines Abschnitts der Rohrleitung fließende Fluid zwischen dem ersten und dem zweiten Modul zur Erzeugung von Dichtigkeit zu isolieren,
wobei das Werkzeug ferner ein Modul (160) zum Verringern des Drucks des in dem äußeren Teil vorhandenen Fluids umfasst,
**dadurch gekennzeichnet, dass** das Druckminderungsmodul ein Reservoir (500) aufweist, das auf dem Werkzeug angebracht ist und mit einem Ventil (510) versehen ist, wobei das Reservoir zunächst leer ist, bevor das Ventil geöffnet wird.

2. Werkzeug nach Anspruch 1, aufweisend mindestens einen ersten Drucksensor (420), der eingerichtet ist, um den Druck in dem Leitungssegment zu messen, und mindestens einen zweiten Drucksensor (425), der eingerichtet ist, um den Druck im äußeren Teil zu messen.

3. Werkzeug nach einem der Ansprüche 1 oder 2, wobei das erste und das zweite Modul zur Erzeugung von Dichtigkeit zweiteilig sind und Abdichtschleusen zwischen den beiden Teilen des ersten oder zweiten Moduls zur Erzeugung von Dichtigkeit definieren.

4. Werkzeug nach Anspruch 3, umfassend ein Modul zur Druckminderung in mindestens einer der Abdichtschleusen oder ein Modul zur Druckminderung in jeder Abdichtschleuse.

5. Werkzeug nach einem der Ansprüche 3 oder 4, umfassend mindestens einen zusätzlichen Drucksensor, der eingerichtet ist, um den Druck in mindestens einer der Schleusen zu messen.

6. Werkzeug nach einem der Ansprüche 1 bis 5, wobei das Werkzeug einen im Verhältnis zur axialen Richtung des Leitungssegments geneigten Durchgang in der Wand des Leitungssegments umfasst.

7. Werkzeug nach einem der Ansprüche 1 bis 6, umfassend ein Modul (450) zum Speichern elektrischer Energie und/oder ein Modul zum Speichern hydraulischer Energie.

8. Anlage, umfassend eine Rohrleitung (200) und ein Werkzeug (1) nach einem der Ansprüche 1 bis 7.

9. Verfahren zur Verwendung des Werkzeugs nach einem der Ansprüche 1 bis 7, das einen Eingriff an der Wand einer Rohrleitung umfasst.

## Claims

1. A tool for intervention on the wall of a fluid pipe, comprising a pipe segment (100) through which the fluid is intended to flow when the tool is in the pipe, and at least first and second modules (120, 125, 130, 135) for creating a seal between the wall of the pipe and the pipe segment, to isolate the fluid flowing in an outer part (320) of a segment of the pipe, between the first and second modules for creating a seal,
the tool further comprising a module (160) for reducing the pressure of the fluid present in the outer part,
**characterized in that** the module for reducing the pressure comprises a reservoir (500) mounted on the tool and provided with a valve (510), the reservoir initially being empty before the valve is opened.

2. The tool according to claim 1, comprising at least one first pressure sensor (420) arranged to measure the pressure in the pipe segment and at least one second sensor pressure (425) arranged to measure the pressure in the outer part.

3. The tool according to any one of claims 1 or 2, wherein the first and second modules for creating a seal are in two parts, defining airlocks between the two parts of said first or second modules for creating a seal.

4. The tool according to claim 3, comprising a module for reducing the pressure in at least one of the airlocks, or a module for reducing the pressure in each airlock.

5. The tool according to any one of claims 3 or 4, comprising at least one additional pressure sensor arranged to measure the pressure in at least one of said airlocks.

6. The tool according to any one of claims 1 to 5, wherein the tool comprises a passage which is inclined in the wall of the pipe segment relative to the axial direction of the pipe segment.

7. The tool according to any one of claims 1 to 6, comprising a module (450) for storing electrical energy and/or a module for storing hydraulic energy.

8. An installation comprising a pipe (200) and a tool (1) according to any one of claims 1 to 7.

9. A method of using the tool according to any one of claims 1 to 7, comprising an intervention on the wall of a pipe.
